# EUROPÄISCHE PATENTSCHRIFT

(11) **EP 2 202 436 B1**
(45) Veröffentlichungstag und Bekanntmachung des Hinweises auf die Patenterteilung: **16.09.2015**
(21) Anmeldenummer: 09175734.4
(22) Anmeldetag: 12.11.2009
(51) Int. Cl.: F16L 11/08

(54) **Flexibler Schlauch**
Flexible hose
Tuyau flexible

(30) Priorität: 19.12.2008 DE 102008055552
(43) Veröffentlichungstag der Anmeldung: 30.06.2010
(73) Patentinhaber: ContiTech Schlauch GmbH, 30165 Hannover (DE)
(72) Erfinder: Brühne, Klaus, 34497, Korbach (DE); Schmelter, Klaus, 59929, Brilon (DE); Hönisch, Dirk, 01855, Sebnitz (DE); Tasseki, Metin, 34497, Korbach (DE)
(74) Vertreter: Finger, Karsten

(56) Entgegenhaltungen:
- EP-A1- 0 148 100
- WO-A2-00/22328
- US-A- 4 276 908
- US-A- 4 706 712
- US-A1- 2008 072 985

## Beschreibung

Die Erfindung betrifft einen flexiblen Schlauch aus einer inneren Schicht aus elastischem Material, wenigstens einer aus Textilgarnen oder Textilzwirnen und Monofilamenten bestehenden Verstärkungsschicht sowie einer äußeren Deckschicht aus elastomerem Material.

Ein derartiger flexibler Schlauch ist aus der EP 0 148 100 A1 bekannt. Bei diesem flexiblen Schlauch besteht die Verstärkungsschicht aus in einer Richtung um die innere Schicht gewickelten flexiblen Textilgarnen oder Textilgarnsträngen und aus entgegengesetzt dazu schraubenförmig um die innere Schicht ebenfalls gewickelten, biegesteifen Monofilamenten, die miteinander verflochten sind; d.h. in einer Flechtrichtung werden nur Textilgame oder Textilgamstränge und in der anderen Flechtrichtung nur Monofilamente verwendet. Die Textilgame oder Textilgamstränge und die Monofilamente werden unter gleicher Zugspannung gewickelt, so dass die biegesteifen Monofilamente beim Verflechten mit den Textilgarnen oder Textilgarnsträngen im Wesentlichen gerade bleiben, während die Textilgame oder Textilgamstränge abwechselnd gebogen über und unter den Monofilamenten zu liegen kommen. Dieser flexible Schlauch ist für Benzinschläuche an Zapfsäulen vorgesehen und soll bei dem darin herrschenden Druck eine möglichst geringe Volumenzunahme aufweisen, um die Zapfgenauigkeit nicht zu beeinträchtigen. Aus diesem Grunde wechseln sich ein Textilgarn oder ein Textilgamstrang und ein Monofilament jeweils ab, indem in einer Flechtrichtung nur Textilgame oder Textilgarnstränge und in der anderen Flechtrichtung nur Monofilamente verwendet werden. Dieser Schlauch lässt sich daher nur mit verhältnismäßig großem Biegeradius biegen.

Ein weiterer flexibler Schlauch ist in der US 4,302,266 A beschrieben. Dieser Schlauch ist für Hochdruckanwendungen vorgesehen und besteht aus einer inneren Schicht aus elastischem Material und einer aus Textilgarnen oder Textilgarnsträngen und Monofilamenten bestehenden Verstärkungsschicht. In beiden Flechtrichtungen liegen jeweils drei Textilgarne oder Textilgamstränge zwischen parallelen, biegesteifen Monofilamenten, die miteinander zu einer dichten Verstärkungsschicht verflochten sind. Die Monofilamente bestehen aus bruchfesten Metalldrähten, und durch das die innere Schicht bedeckende Geflecht aus Textilgarnen oder Textilgarnsträngen und Metallmonofilamenten wird erreicht, dass dieser bekannte Schlauch hohen Innendrücken widersteht, ohne sich dabei in Längsrichtung zu dehnen oder im Volumen wesentlich zu vergrößern.

Der Erfindung liegt die Aufgabe zugrunde, einen flexiblen Schlauch zu schaffen, der in verhältnismäßig kleinen Radien biegsam ist, ohne dabei einzuknicken, und auch gegen Einfallen bei Unterdruck im Schlauch widerstandsfähig ist, ohne übermäßig viel Material in der Verstärkungsschicht, insbesondere wenig Monofilamente zu erfordern. Diese Aufgabe wird bei einem flexiblen Schlauch aus einer inneren Schicht aus elastischem Material, wenigstens einer aus Textilgarnen oder Textilzwirnen und Monofilamenten bestehenden Verstärkungsschicht sowie einer äußeren Deckschicht aus elastomerem Material durch die Merkmale des Anspruchs 1 gelöst.

Bevorzugte Merkmale der Erfindung werden in den abhängigen Ansprüchen definiert.

Dadurch, dass die Monofilamente jeweils im Abstand von mehreren Textilgarnen oder Textilzwirnen schraubenförmig um die innere Schicht gewickelt sind, weist die Verstärkungsschicht nur einen geringeren Anteil an Monofilamenten auf und der Schlauch lässt sich daher mit geringem Radius ohne einzuknicken biegen, und ist auch gegen ein Einfallen bei Unterdruck im Schlauchinneren ausreichend gesichert.

Gemäß einer Ausführungsform kann die Verstärkungsschicht aus einer ersten Lage schraubenförmig gewickelter Textilgame oder Textilzwirne und einer zweiten Lage entgegengesetzt schraubenförmig gewickelter Textilgame oder Textilzwirne bestehen, während die Monofilamente gleichsinnig zwischen die Textilgarne oder Textilzwirne der ersten und/oder der zweiten Lage gewickelt sind. Bei dieser Ausführungsform sind die Textilgamlagen und die Monofilamente nicht miteinander verflochten und werden durch das sie durchdringende elastomere Material in ihrer Lage gehalten.

Vorzugweise bestehen die Monofilamente aus einem nichtmetallischem Werkstoff und weisen einen so großen Durchmesser auf, dass ein ausreichender Widerstand gegen ein Einknicken bei Biegung und gegen ein Einfallen des Schlauches bei Unterdruck im Schlauch gegeben ist, wobei der Durchmesser der Monofilamente vorzugsweise im Bereich von 0,2 bis 2,0 mm liegen kann, während die Textilgame oder Textilzwirne immer einen kleineren Durchmesser als die Monofilamente aufweisen. Die Textilgarne oder Textilzwirne können beispielsweise aus Polyamid, Polyester, Polyvinylacetale oder Aramid bestehen.

Die Erfindung wird nachstehend anhand mehrerer, in der Zeichnung gezeigter Ausführungsbeispiele weiter erläutert. In der Zeichnung zeigt
- Fig. 1: eine aufgebrochene Darstellung eines erfindungsgemäßen flexiblen Schlauchs mit einer zweilagigen Verstärkungsschicht aus Textilgarnen oder Textilgarnsträngen und in die obere Lage integrierten Monofilamenten,
- Fig. 2: eine aufgebrochene Darstellung eines erfindungsgemäßen flexiblen Schlauchs mit einer zweilagigen Verstärkungsschicht aus Textilgarnen oder Textilgarnsträngen und in die untere Schicht integrierten Monofilamenten,
- Fig. 3: eine aufgebrochene Darstellung eines erfindungsgemäßen flexiblen Schlauchs mit einer zweilagigen Verstärkungsschicht und in beide Lagen integrierten Monofilamenten,
- Fig. 4: eine aufgebrochene Darstellung eines nicht erfindungsgemäßen flexiblen Schlauchs mit einer Verstärkungsschicht aus kreuzweise verflochtenen Textilgarnen oder Textilgarnsträngen und in die Verstärkungsschicht integrierten Monofilamenten, und
- Fig. 5: eine aufgebrochene Darstellung eines nicht erfindungsgemäßen flexiblen Schlauchs mit einer Verstärkungsschicht aus kreuzweise verflochtenen Textilgarnen oder Textilgarnsträngen und darüber kreuzweise gewickelten Monofilamenten.

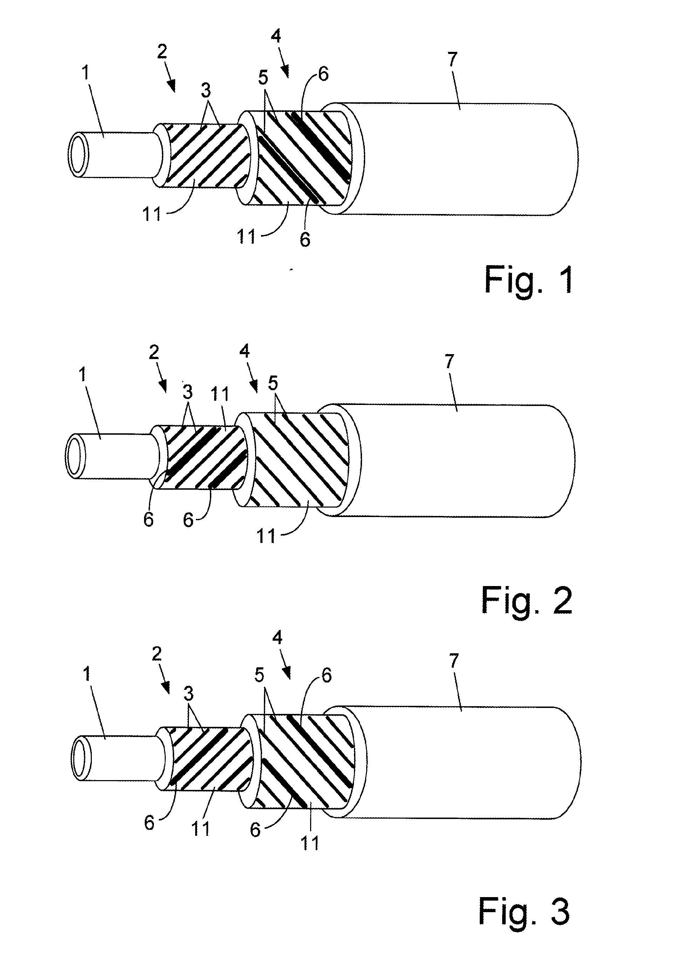

Die Ausführungsform gemäß Fig. 1 besteht aus einer inneren Schicht 1 aus einem elastischem Material, vorzugsweise einem Elastomermaterial, einer ersten Lage einer Verstärkungsschicht 2 aus schraubenförmig um die innere Schicht 1 gewickelten Textilgarnen oder Textilzwirnen 3, die in einer Schicht aus elastischem Material 11 eingebettet sind, einer zweiten Lage 4 aus entgegengesetzt schraubenförmig gewickelten Textilgarnen oder Textilzwirnen 5, ebenfalls in elastischem Material 11 eingebettet, und einer äußeren Deckschicht 7 aus elastischem Material, vorzugsweise aus einem Elastomermaterial.

Im Abstand von wenigstens zwei Textilgarnen oder Textilzwirnen 5 weist die zweite Lage 4 gleichsinnig gewickelte Monofilamente 6 auf, die jeweils ein Textilgarn oder ein Textilzwirn 5 ersetzen.

Vorzugsweise liegen mindestens drei Textilgame oder Textilzwirne 5 zwischen jeweils zwei Monofilamenten 6.

Die Ausführungsform gemäß Fig. 2 unterscheidet sich von der Ausführungsform gemäß Fig. 1 dadurch, dass die Monofilamente 6 in die erste Lage 2 integriert gewickelt sind.

Bei der Ausführungsform gemäß Fig. 3 sind Monofilamente 6 sowohl in die erste Lage 2 als auch in die zweite Lage 4 integriert gewickelt.

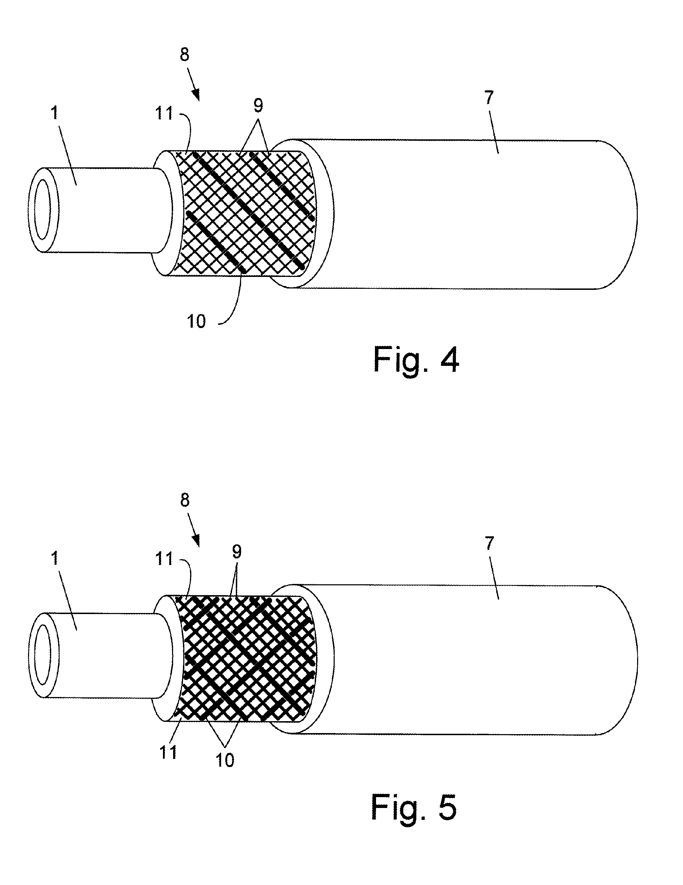

Die Ausführungsform gemäß Fig. 4 besteht wiederum aus einer inneren Schicht 1 aus elastischem Material, insbesondere einem Elastomermaterial, und die Verstärkungsschicht 8 besteht aus entgegengesetzt schraubenförmig um die innere Schicht 1 gewickelte und miteinander verflochtene Textilgarnen oder Textilzwirnen 9, sowie gleichsinnig in einer Richtung mit den Textilgarnen oder Textilzwirnen 9 gewickelten und mit den entgegengesetzt schraubenförmig gewickelten Textilgarnen oder Textilzwirnen 9 verflochtenen Monofilamenten 10. Die Textilgame oder Textilzwirne 9 und die Monofilamente 10 sind in einer Schicht aus elastischem Material 11 eingebettet und von der äußeren Deckschicht 7 aus elastomerem Material umgeben. Zwischen den Monofilamenten 10 liegen mindestens drei gleichsinnig gewickelte Textilgarne oder Textilzwirne 9.

Die Ausführungsform gemäß Fig. 5 unterscheidet sich von der Ausführungsform gemäß Fig. 4 dadurch, dass die Monofilamente 10 kreuzweise über die Verstärkungssicht 8 aus kreuzweise miteinander verflochtenen Textilgarnen oder Textilzwirnen 9 gewickelt sind und entweder nur übereinander liegen oder auch miteinander verflochten sind. Bei dieser Ausführungsform beträgt der Abstand zwischen den Monofilamenten 10 mindestens das Dreifache des Abstandes zwischen den Textilgarnen oder Textilzwirnen 9.

Allen Ausführungsformen ist gemeinsam, dass die Monofilamente 6, 10 vorzugsweise aus einem nichtmetallischem Werkstoff bestehen und einen so großen Durchmesser aufweisen, dass ein ausreichender Widerstand gegen Einknicken bei Biegung und gegen Einfallen bei Unterdruck im Schlauch gegeben ist, ohne ein Biegen des Schlauchs mit verhältnismäßig kleinem Radius zu behindern.

Vorzugsweise liegt der Durchmesser der Monofilamente 6, 10 im Bereich von 0,5 bis 2,0 mm, während die Textilgame oder Textilzwirne 3, 5, 9 immer einen kleineren

Durchmesser aufweisen. Die Textilgame oder Textilzwirne werden aus Polyamid-, Polyester-, Polyvinylacetale- oder Aramidfilamenten gebildet.

Im Interesse einer guten Biegefähigkeit werden die Verstärkungsschichten 2, 4, 8 mit den Textilgarnen oder Textilzwirnen 3, 5, 9 und den Monofilamenten 6, 10 mit verhältnismäßig großen Abständen zwischen den Textilgarnen oder Textilzwirnen 3, 5, 9 und den Monofilamenten 6, 10 ausgebildet, und der erfindungsgemäße flexible Schlauch weist eine größere Dehnungsfähigkeit in Längsrichtung und Volumenzunahme bei Druckbeaufschlagung auf, die bei den vorgesehenen Anwendungsfällen annehmbar oder sogar erwünscht ist.

### Bezugszeichen

- 1: Innere Schicht
- 2: Este Lage der Verstärkungsschicht
- 3: Textilgarn oder Textilzwirn
- 4: Zweite Lage der Verstärkungsschicht
- 5: Textilgarn oder Textilzwirn
- 6: Monofilament
- 7: Äußere Deckschicht
- 8: Verstärkungsschicht
- 9: Textilgarn oder Textilzwirn
- 10: Monofilament
- 11: Elastomeres Material

## Patentansprüche

1. Flexibler Schlauch aus einer inneren Schicht (1) aus elastischem Material, wenigstens einer aus Textilgarnen oder Textilzwirnen (3, 5) und Monofilamenten (6) bestehenden Verstärkungsschicht (2, 4) sowie einer äußeren Deckschicht (7) aus elastomerem Material,
**gekennzeichnet dadurch,**
**dass** die Verstärkungsschicht (2, 4) aus abwechselnd entgegengesetzt schraubenförmig um die innere Schicht (1) gewickelten, biegeweichen Textilgarnen oder Textilzwirnen (3, 5) und aus wenigstens einer Lage (2, 4) im Abstand von mehreren Textilgarnen oder Textilzwirnen (3, 5) ebenfalls schraubenförmig um die innere Schicht (1) gewickelten, biegesteifen Monofilamenten (6) besteht,
wobei die Monofilamente (6) gleichsinnig zu einer der beiden Wicklungsrichtungen mit den Textilgarnen oder Textilzwirnen (3, 5) zwischen den Textilgarnen oder Textilzwirnen (3, 5) in derselben Lage (2, 4) gewickelt sind; und
wobei die Monofilamente (6) gegenüber den Textilgarnen oder Textilzwirnen (3, 5) innerhalb derselben Lage (2, 4) beabstandet sind.

2. Flexibler Schlauch nach Anspruch 1, **dadurch gekennzeichnet, dass** die Verstärkungsschicht (2, 4) aus einer ersten Lage (2) schraubenförmig gewickelter Textilgarne oder Textilzwirne (3) und einer zweiten Lage (4) entgegengesetzt schraubförmig gewickelter Textilgarne oder Textilzwirnen (5) besteht, und die Monofilamente (6) gleichsinnig innerhalb der ersten Textilgarnlage (2) gewickelt sind.

3. Flexibler Schlauch nach einem der Ansprüche 1 oder 2, **dadurch gekennzeichnet, dass** die Monofilamente (6) aus einem nichtmetallischen Werkstoff bestehen und einen so großen Durchmesser aufweisen, dass ein ausreichender Widerstand gegen Einknicken bei Biegung und gegen Einfallen bei Unterdruck im Schlauch gegeben ist.

4. Flexibler Schlauch nach Anspruch 3, **dadurch gekennzeichnet, dass** der Durchmesser der Monofilamente (6) im Bereich von 0,5 bis 2,0 mm liegt.

5. Flexibler Schlauch nach einem der Ansprüche 1 bis 4, **dadurch gekennzeichnet, dass** die Textilgarne oder Textilzwirne (3,5) immer einen kleineren Durchmesser als die Monofilamente (6) aufweisen.

## Claims

1. Flexible hose comprising an inner layer (1) in elastic material, at least one reinforcing layer (2, 4) consisting of textile yarns or threads (3, 5) and monofilaments (6), and also an outer, covering layer (7) in elastomeric material,
**characterized in that**
the reinforcing layer (2, 4) consists of flexurally soft textile yarns or threads (3, 5) helically wound alternatingly oppositely around the inner layer (1) and of at least one ply (2, 4) of flexurally stiff monofilaments (6) likewise helically wound around the inner layer (1) at a distance from a plurality of textile yarns or threads (3, 5),
wherein the monofilaments (6) are wound co-rotatingly with one of the two winding directions and with the textile yarns or threads (3, 5) and in-between the textile yarns or threads (3, 5) in the same ply (2, 4);
and
wherein the monofilaments (6) are spaced apart from the textile yarns or threads (3, 5) within the same ply (2, 4).

2. Flexible hose according to Claim 1, **characterized in that** the reinforcing layer (2, 4) consists of a first ply (2) of helically wound textile yarns or threads (3) and a second ply (4) of oppositely helically wound textile yarns or threads (5), and the monofilaments (6) are co-rotatingly wound within the first textile yarn ply (2).

3. Flexible hose according to either of Claims 1 and 2, **characterized in that** the monofilaments (6) consist of a non-metallic material and have a sufficiently large diameter for the hose to be sufficiently resistant to kinking on bending and to collapsing in the event of negative pressure in the hose.

4. Flexible hose according to Claim 3, **characterized in that** the diameter of monofilaments (6) is in the range from 0.5 to 2.0 mm.

5. Flexible hose according to any of Claims 1 to 4, **characterized in that** the textile yarns or threads (3, 5) always have a smaller diameter than the monofilaments (6).

## Revendications

1. Tuyau flexible constitué par une couche intérieure (1) en un matériau élastique, au moins une couche de renforcement (2, 4) constituée de fils textiles ou de retors textiles (3, 5) et de monofilaments (6), ainsi qu'une couche supérieure extérieure (7) en un matériau élastomère,
**caractérisé en ce que** la couche de renforcement (2, 4) est constituée de fils textiles ou de retors textiles (3, 5) flexibles, enroulés hélicoïdalement autour de la couche intérieure (1), de manière opposée en alternance, et d'au moins une couche (2, 4) de monofilaments rigides (6), également enroulés hélicoïdalement autour de la couche intérieure (1), espacés de plusieurs fils textiles ou retors textiles (3, 5),
les monofilaments (6) étant enroulés dans le même sens qu'une des deux directions d'enroulement avec les fils textiles ou les retors textiles (3, 5) entre les fils textiles ou les retors textiles (3, 5) dans la même couche (2, 4) ; et
les monofilaments (6) étant espacés par rapport aux fils textiles ou aux retors textiles (3, 5) dans la même couche (2, 4).

2. Tuyau flexible selon la revendication 1, **caractérisé en ce que** la couche de renforcement (2, 4) est constituée d'une première couche (2) de fils textiles ou de retors textiles (3) enroulés hélicoïdalement et d'une seconde couche (4) de fils textiles ou de retors textiles (5) enroulés hélicoïdalement de manière opposée, et les monofilaments (6) sont enroulés dans le même sens dans la première couche de fils textiles (2).

3. Tuyau flexible selon l'une quelconque des revendications 1 ou 2, **caractérisé en ce que** les monofilaments (6) sont constitués d'un matériau non métallique et présentent un diamètre assez grand pour obtenir une résistance suffisante à la pliure en cas de flexion et à la retombée en cas de sous-pression dans le tuyau.

4. Tuyau flexible selon la revendication 3, **caractérisé en ce que** le diamètre des monofilaments (6) se situe dans la plage allant de 0,5 à 2,0 mm.

5. Tuyau flexible selon l'une quelconque des revendications 1 à 4, **caractérisé en ce que** les fils textiles ou les retors textiles (3, 5) présentent toujours un diamètre plus petit que les monofilaments (6).
